# EUROPÄISCHE PATENTSCHRIFT

(11) **EP 1 714 305 B1**
(45) Veröffentlichungstag und Bekanntmachung des Hinweises auf die Patenterteilung: **11.03.2009**
(21) Anmeldenummer: 05700548.0
(22) Anmeldetag: 17.01.2005
(51) Int. Cl.: H01K 1/46

(54) **FAHRZEUGSCHEINWERFERLAMPE**
VEHICLE HEADLIGHT BULB
AMPOULE DE PHARE DE VEHICULE

(30) Priorität: 09.02.2004 DE 102004006438
(43) Veröffentlichungstag der Anmeldung: 25.10.2006
(73) Patentinhaber: Patent-Treuhand-Gesellschaft für elektrische Glühlampen mbH, 81543 München (DE)
(72) Erfinder: KNORR, Klaus-Peter, 91790 Nennslingen (DE)
(74) Vertreter: Raiser, Franz
(86) Internationale Anmeldenummer: PCT/DE2005/000058
(87) Internationale Veröffentlichungsnummer: WO 2005/076318

(56) Entgegenhaltungen:
- DE-U1- 9 010 517
- GB-A- 1 334 860
- US-A- 3 885 149
- US-A- 4 714 858
- US-A- 4 751 421
- US-A- 4 864 183

## Beschreibung

Die Erfindung betrifft eine Fahrzeugscheinwerferlampe gemäß dem Oberbegriff des Patentanspruchs 1.

### I. Stand der Technik

Eine derartige Fahrzeugscheinwerferlampe ist beispielsweise in der Offenlegungsschriften EP 0 235 855 A1 offenbart. Diese Schrift beschreibt eine Halogenglühlampe des Typs H1, die in Kraftfahrzeugscheinwerfern zur Erzeugung des Abblendlichts oder Fernlichts verwendet wird. Diese Halogenglühlampe besitzt ein Lampengefäß mit einer darin angeordneten Glühwendel und einen Lampensockel, der eine metallische Hülse aufweist, in der ein abgedichtetes Ende des Lampengefäßes fixiert ist. Die aus dem Lampengefäß herausragenden Stromzuführungen der Glühwendel sind mit an die Sockelhülse angeformten Schweißfahnen verschweißt. Die Schweißfahnen dienen zusätzlich auch dazu, die von der Glühwendel erzeugte Wärme vom abgedichteten Ende des Lampengefäßes abzuleiten.

Das deutsche Gebrauchsmuster DE 90 10 517 U1 beschreibt eine Halogenglühlampe des Typs H1, deren Lampengefäß mit Klemmsitz in einer metallischen Sockelhülse fixiert ist. Die Sockelhülse weist angeformte Laschen auf, die in einem Durchbruch der Sockelhülse angeordnet sind und klemmend am Quetschfuß des Lampengefäßes anliegen.

### II. Darstellung der Erfindung

Es ist die Aufgabe der Erfindung, eine gattungsgemäße Fahrzeugscheinwerferlampe mit einer verbesserten Wärmeableitung im Bereich des abgedichteten Endes des Lampengefäßes bereitzustellen. Insbesondere soll die thermische Belastung des abgedichteten Endes des Lampengefäßes im Bereich der Molybdänfolieneinschmelzungen reduziert werden.

Diese Aufgabe wird erfindungsgemäß durch die Merkmale des Patentanspruchs 1 gelöst. Besonders vorteilhafte Ausführungen der Erfindung sind in den abhängigen Patentansprüchen beschrieben.

Die erfindungsgemäße Fahrzeugscheinwerferlampe besitzt ein Lampengefäß, ein innerhalb des Lampengefäßes angeordnetes Leuchtmittel und einen Lampensockel, wobei das Lampengefäß ein abgedichtetes Ende besitzt, das mindestens eine Molybdänfolienabdichtung aufweist, die mindestens eine Molybdänfolie und einen damit überlappenden und verbundenen sowie aus dem abgedichteten Ende des Lampengefäßes herausragenden Stromzuführungsdraht umfasst, und wobei der Lampensockel eine metallische Sockelhülse aufweist, in dem das abgedichtete Ende des Lampengefäßes fixiert ist und die im Bereich des abgedichteten Endes mindestens einen Durchbruch besitzt. Erfindungsgemäß ist die metallische Sockelhülse mit mindestens einer angeformten Lasche ausgestattet, die in den Durchbruch der metallischen Sockelhülse hineinragt und im Überlappungsbereich der mindestens einen Molybdänfolie mit dem Stromzuführungsdraht an dem abgedichteten Ende des Lampengefäßes anliegt.

Dadurch wird die thermische Belastung des abgedichteten Endes des Lampengefäßes im Bereich der Molybdänfolieneinschmelzung und insbesondere im Überlappungsbereich der mindestens einen Molybdänfolie mit dem Stromzuführungsdraht während des Lampenbetriebs reduziert. Die vorgenannte, an die metallische Sockelhülse angeformte Lasche ermöglicht eine verbesserte Ableitung der Wärme von dem abgedichteten Ende des Lampengefäßes. Insbesondere kann dadurch die Temperatur im vorgenannten Überlappungsbereich von Molybdänfolie und Stromzuführungsdraht während des Lampenbetriebs verringert werden und die Gefahr des Auftretens von Oxidation und Sprüngen im Bereich der vorzugsweise als Schweißung ausgebildeten Verbindung von Molybdänfolie und Stromzuführungsdraht reduziert werden. Die Lebensdauer der Lampe wird dadurch verlängert.

Um eine optimale Kühlung der Verbindungsstelle zwischen der vorgenannten Molybdänfolie und dem Stromzuführungsdraht zu erzielen, liegt die mindestens eine, an die metallische Sockelhülse angeformte Lasche in vorteilhafter Weise im Bereich dieser, vorzugsweise als Schweißung ausgebildeten Verbindungsstelle an dem abgedichteten Ende des Lampengefäßes an.

Die metallische Sockelhülse der erfindungsgemäßen Fahrzeugscheinwerferlampe besteht vorzugsweise aus Edelstahl oder Messing, da diese Metalle gute Verarbeitungseigenschaften sowie hohe Korrosionsbeständigkeit aufweisen.

### III. Beschreibung des bevorzugten Ausführungsbeispiels

Nachstehend wird die Erfindung anhand eines bevorzugten Ausführungsbeispiels näher erläutert. Es zeigen:
- Figur 1: Eine Seitenansicht einer Fahrzeugscheinwerferlampe gemäß des bevorzugten Ausführungsbeispiels der Erfindung
- Figur 2: Die in Figur 1 abgebildete Fahrzeugscheinwerferlampe in einer gegenüber der Seitenansicht der Figur 1 um 90 Grad bezüglich der Lampenachse gedrehten Seitenansicht
- Figur 3: Eine Seitenansicht des Lampengefäßes der in Figur 1 abgebildeten Fahrzeugscheinwerferlampe
- Figur 4: Eine teilweise geschnitten dargestellte Seitenansicht eines Ausschnitts der Sockelhülse der in Figur 1 abgebildeten Fahrzeugscheinwerferlampe
- Figur 5: Der in Figur 4 abgebildete Ausschnitt der Sockelhülse in einer um 90 Grad gegenüber der Figur 4 gedrehten und geschnitten dargestellten Seitenansicht
- Figur 6: Eine Seitenansicht der Kontaktfahne und des Sockelsteins der in Figur 1 abgebildeten Fahrzeugscheinwerferlampe
- Figur 7: Die in Figur 6 abgebildete Kontaktfahne mit Sockelstein in einer gegenüber der Figur 6 um 90 Grad gedrehten Seitenansicht

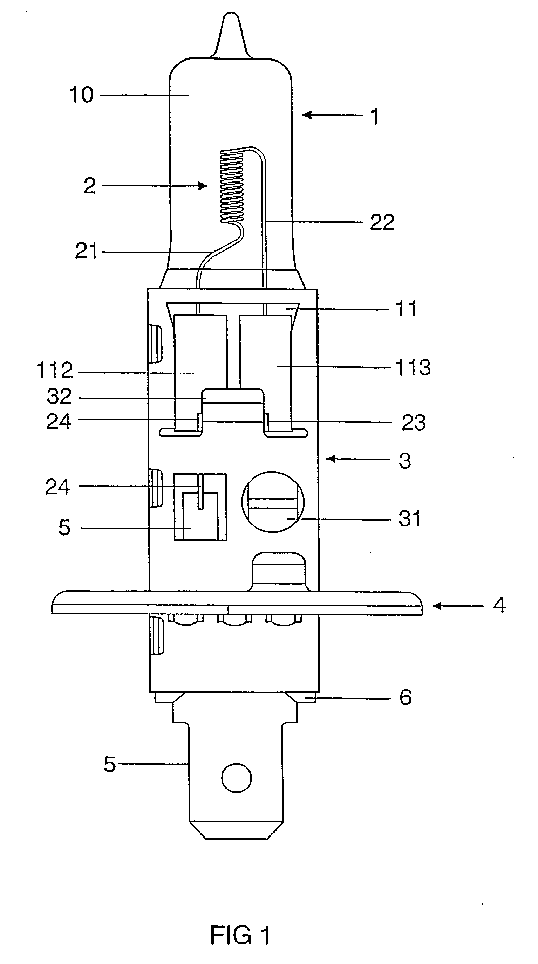

Bei dem in den Figuren 1 bis 7 abgebildeten bevorzugten Ausführungsbeispiel der Erfindung handelt es sich um eine Halogenglühlampe des Typs H1-Lampe, die in Kraftfahrzeugscheinwerfern zum Erzeugen des Abblendlicht, des Fernlichts oder des Nebellichts verwendbar ist.

Diese Lampe besitzt ein im wesentlichen zylindrisches Lampengefäß 1 aus Quarzglas, das einen im wesentlichen kreiszylindrischen Innenraum 10 aufweist und an einem Ende mittels einer Quetschdichtung 11 verschlossen ist. Im Innenraum 10 des Lampengefäßes 1 ist eine axial ausgerichtete Glühwendel 2 angeordnet, deren Enden jeweils über eine innere Stromzuführung 21, 22 aus Wolfram mit einer Molybdänfolie 112, 113 verschweißt sind. Die Molybdänfolien 112, 113 sind Bestandteil der Quetschdichtung 11, die als Molybdänfolienabdichtung ausgebildet ist. Sie sind gasdicht in dem Quetschfuß 11 eingebettet. Aus dem Quetschfuß 11 ragen zwei aus Molybdän bestehende Stromzuführungsdrähte 23, 24 heraus, die jeweils mit einer der Molybdänfolien 112 bzw. 113 verschweißt sind und zur Stromversorgung der Glühwendel 2 dienen. Der Quetschfuß 11 ist in einer metallischen Sockelhülse 3 mit Klemmsitz fixiert. Die Sockelhülse 3 weist im Bereich des Quetschfußes 11 an zwei gegenüberliegenden Seitenwänden jeweils einen Durchbruch 30 auf, so dass die breiten Seiten 110 des Quetschfußes 11 im Bereich der Molybdänfolien 112, 113 von der Sockelhülse 3 im wesentlichen nicht abgedeckt werden, um die Wärmeabstrahlung von den breiten Seiten 110 des Quetschfußes 11 nicht zu behindern. Die Sockelhülse 3 umschließt im wesentlichen nur die schmalen Stirnseiten 111 des Quetschfußes 11. Die Sockelhülse 3 besitzt zwei Laschen 32, die sich jeweils in einen der Durchbrüche 30 erstrecken und im Überlappungsbereich der Stromzuführungsdrähte 23, 24 mit den Molybdänfolien 112, 113 an dem Quetschfuß 11 anliegen. Diese Laschen 32 sind jeweils an eine Kante des jeweiligen Durchbruchs 30 in der Sockelhülse 3 angeformt. Sie dienen als Kühlbleche zur Reduktion der thermischen Belastung der Schweißverbindungen zwischen den Stromzuführungsdrähten 23, 24 und den Molybdänfolien 112, 113.

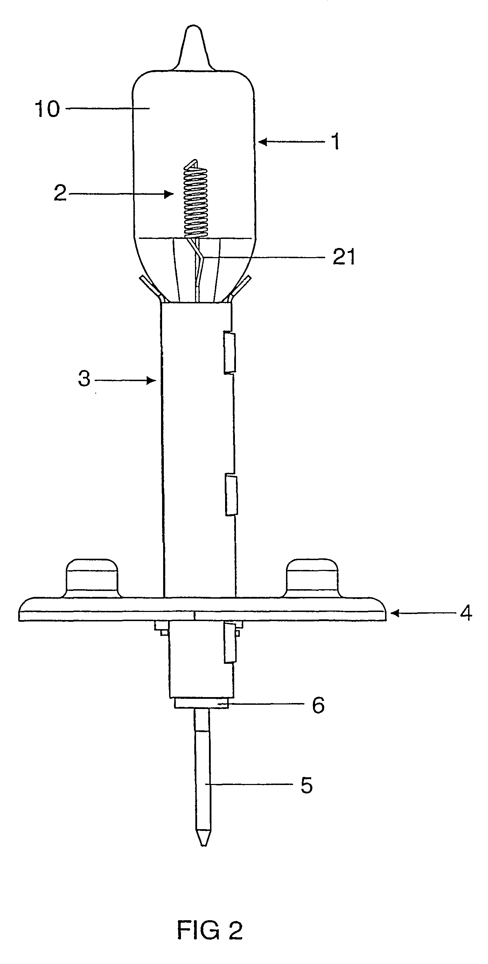

Der Stromzuführungsdraht 23 ist mit einer an die Sockelhülse 3 angeformten, in den Innenraum der Sockelhülse 3 weisenden Kontaktlasche 31 elektrisch leitend verbunden. Die Sockelhülse 3 und damit auch der Stromzuführungsdraht 23 sowie die innere Stromzuführung 22 befinden sich während des Lampenbetriebs beispielsweise auf Massepotential. Den elektrischen Gegenpol dazu bildet die Kontaktfahne 5, die mit dem Stromzuführungsdraht 24 elektrisch leitend verbunden ist und mittels des aus Keramik bestehenden Sockelsteins 6 gegenüber der Sockelhülse 3 elektrisch isoliert ist. An der Sockelhülse 3 ist ein ringförmiger Sockelflansch 4 befestigt, der zur Ausrichtung und Montage der H1-Lampe in einem Kraftfahrzeugscheinwerfer dient. Der Lampensockel besteht aus dem Sockelflansch 4, der Sockelhülse 3, den Sockelstein 6 und der Kontaktfahne 5. Die Sockelhülse 3 besteht vorzugsweise aus Edelstahl oder aus Messing. Der Sockelflansch 4 besteht aus Neusilber und die Kontaktfahne 5 besteht aus Edelstahl. In den Figuren 2 bis 7 sind Details des Lampensockels und des Lampengefäßes 1 dargestellt.

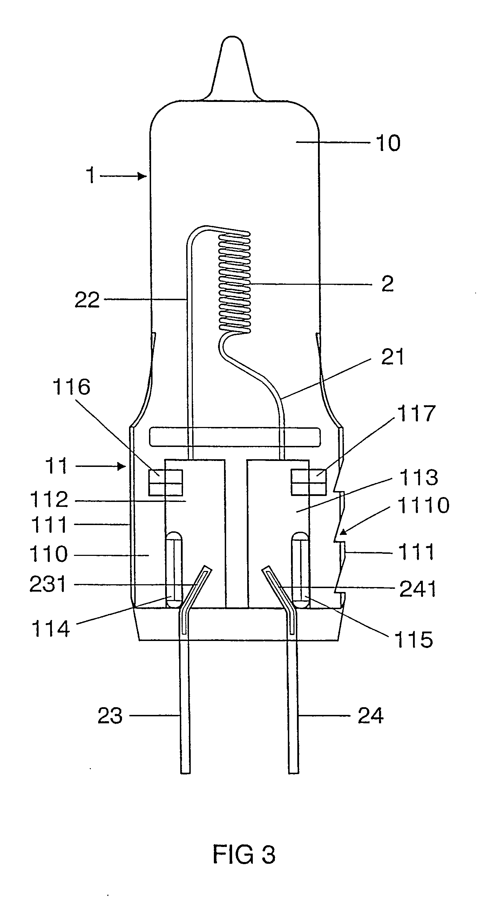

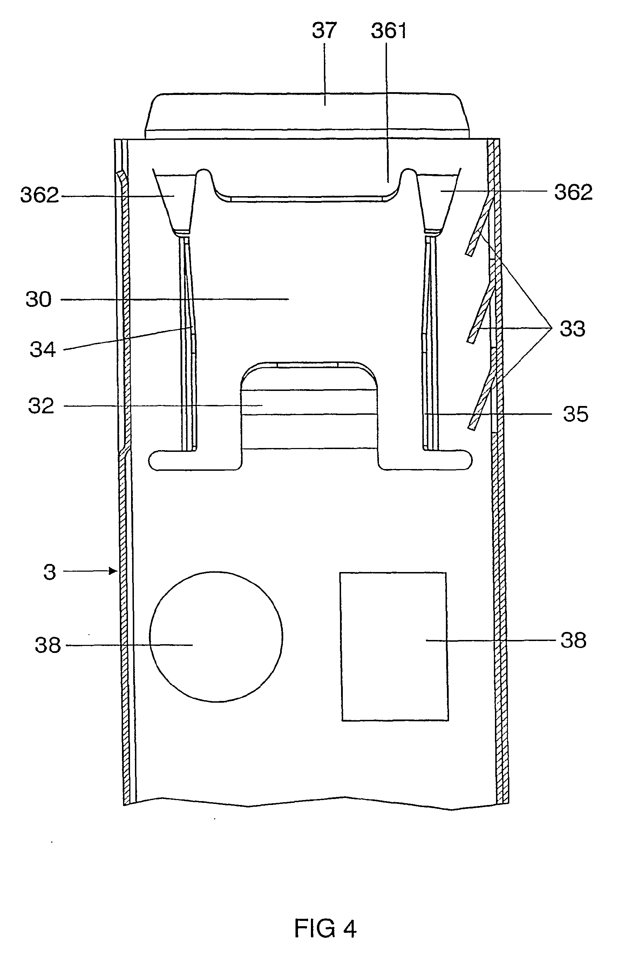

Figur 3 zeigt Einzelheiten des Lampengefäßes 1 und der Quetschdichtung 11. Die Quetschdichtung 11 weist zwei einander gegenüberliegende breite Seiten 110 und zwei einander gegenüberliegende schmale Stirnseiten 111 auf. Sie ist im wesentlichen quaderförmig ausgebildet. Die mit den inneren Stromzuführungen 21, 22 und den Stromzuführungsdrähten 23, 24 verschweißten Molybdänfolien 112, 113 sind gasdicht in dem Quetschfuß 11 eingebettet. Die abgewinkelten Enden 231, 241 der Stromzuführungsdrähte 23, 24 überlappen mit den Molybdänfolien 112 bzw. 113 und sind mit den Molybdänfolien 112 bzw. 113 verschweißt. In diesem Überlappungsbereich liegen die beiden Laschen 32 an den breiten Seiten 110 der Quetschdichtung 11 an, so dass die Quetschdichtung 11 zwischen den beiden Laschen 32 mit Klemmsitz angeordnet ist. Eine der beiden schmalen Stirnseiten 111 der Quetschdichtung 11 ist mit einem sich in Längsrichtung der Lampe bzw. des Lampengefäßes 1 erstreckenden sägezahnförmigen Profil 1110 versehen. Dieses Profil 1110 bildet zusammen mit mindestens einer der drei in der Figur 4 abgebildeten Verriegelungslaschen 33, die an die Sockelhülse 3 angeformt sind und sich in den Innenraum der Sockelhülse 3 erstrecken, eine Rastverbindung. Nach dem Einsetzen der Quetschdichtung 11 in die Sockelhülse 3 rasten die Verriegelungslaschen 33 hinter den Zähnen des sägezahnförmigen Profils 1110 ein und verhindern so, dass die Quetschdichtung 11 wieder aus der Sockelhülse 3 herausgezogen werden kann. Die Verriegelungslaschen 33 sind federnd ausgebildet, so dass die schmalen Stirnseiten 111 der Quetschdichtung 11 ebenfalls mit Klemmsitz in der Sockelhülse 3 angeordnet sind. Jede der beiden breiten Seiten 110 der Quetschdichtung 11 ist mit einem sich in Längsrichtung der Lampe bzw. des Lampengefäßes 1 erstreckenden, angeformten Paar von Führungsstegen 114, 115 ausgestattet, die jeweils mit einem Paar von an die Sockelhülse 3 angeformten Laschen 34, 35 zusammenwirken, um eine exakte Ausrichtung des Lampengefäßes 1 gegenüber der Sockelhülse 3 zu ermöglichen. Die Laschen 34, 35 sind jeweils an zwei gegenüberliegenden, in Längsrichtung der Lampe verlaufenden Kanten der im Bereich der Quetschdichtung 11 angeordneten Durchbrüche 30 der Sockelhülse 3 angeformt und liegen mit Klemmsitz an den breiten Seiten 110 der Quetschdichtung 11 an. Die Führungsstege 114, 115 dienen den freien Enden der Laschen 34, 35 als Anschlag. Zwei Paare von Noppen 116, 117, die an den breiten Seiten 110 der Quetschdichtung 11 angeformt sind, wirken mit jeweils einer Führungslasche 361, die an die metallische Sockelhülse 3 angeformt sind und sich in den Durchbruch 30 erstrecken, zusammen, um eine genaue Ausrichtung und Führung der Quetschdichtung 11 in der Sockelhülse 3 zu gewährleisten.

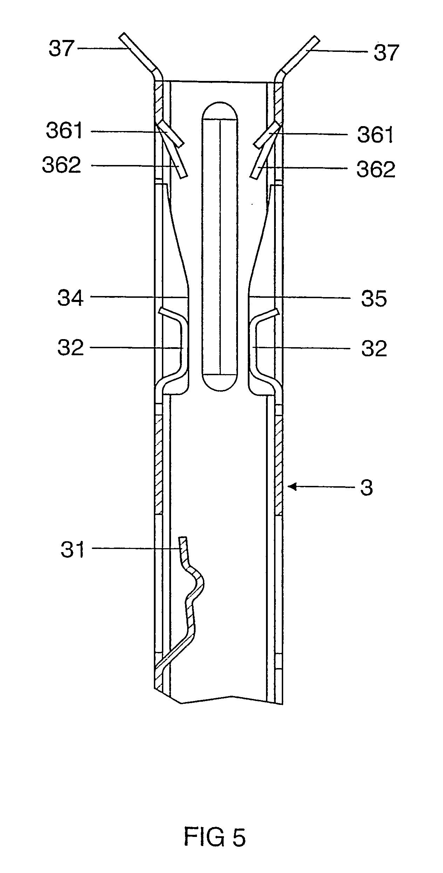

Einzelheiten der Sockelhülse 3 sind in den Figuren 4 und 5 abgebildet. Die Sockelhülse 3 besitzt noch vier weitere Befestigungslaschen 362, die im Bereich der Durchbrüche 30 mit Klemmsitz an den breiten Seiten der Quetschdichtung 11 anliegen. Außerdem weist die Sockelhülse 3 zwei angeformte Abschirmbleche 37 auf, die den Lampensockel gegen das von der Glühwendel 2 emittierte Licht abschirmen. Die im wesentlichen quaderförmige Sockelhülse 3 besitzt auf zwei gegenüberliegenden Seiten jeweils zwei Aussparungen 38, die zum Verschweißen der Stromzuführungsdrähte 23, 24 mit der Kontaktlasche 31 bzw. der Kontaktfahne 5 dienen.

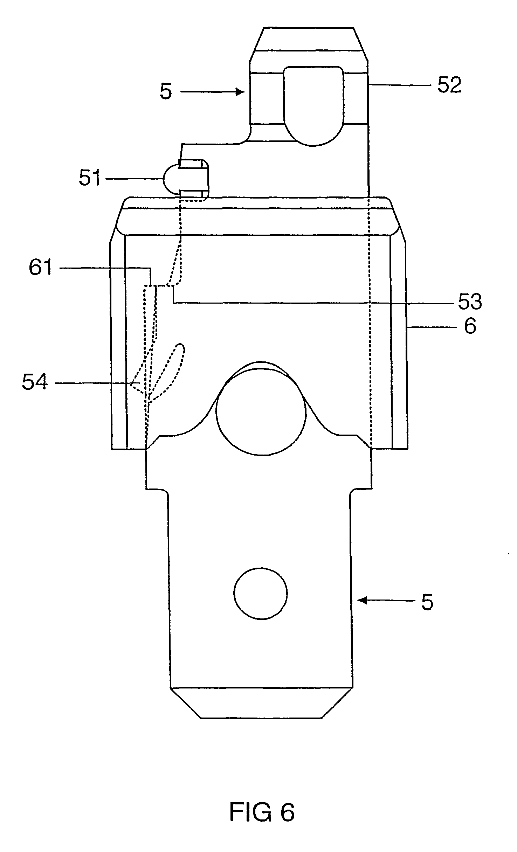

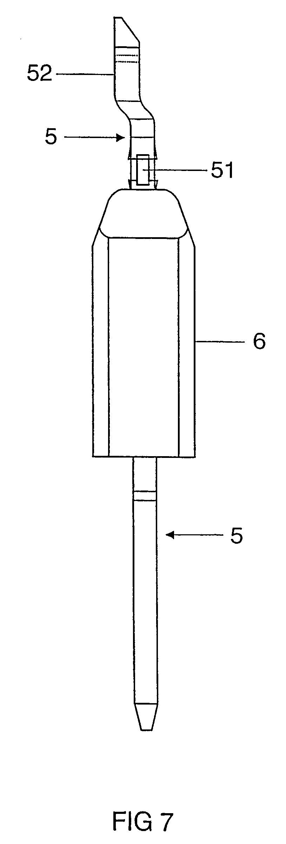

In den Figuren 6 und 7 sind Details der Kontaktfahne 5 und des Sockelsteins 6 dargestellt. Die Kontaktfahne 5 ist mit Klemmsitz in dem hohlen Sockelstein 6 fixiert. Beide Enden der Kontaktfahne 5 ragen aus dem Sockelstein 6 heraus. Im Inneren des Sockelsteins 6 befindet sich ein Absatz 61, auf dem eine Schulter 53 der Kontaktfahne 5 aufsitzt. Die aus dem Sockelstein 6 herausragende Schweißlasche 52 ist mit einer Abflachung 51 bzw. Kröpfung versehen, die mit der Schulter 53 und dem Absatz 61 zusammenwirkt, um den Klemmsitz der Kontaktfahne 5 in dem Sockelstein 6 zu gewährleisten. Die Schweißlasche 52 der Kontaktfahne 5 wird nach dem Einsetzen der aus dem Sockelstein 6 und der Kontaktfahne 5 bestehenden Baueinheit in die Sockelhülse 3 mit dem Stromzuführungsdraht 24 verschweißt. Zur Verankerung der Kontaktfahne 5 in dem Sockelstein 6 weist die Kontaktfahne 5 eine an einer Seitenkante angeformte und von dieser abgespreizte Federlasche 54 auf, die einen Klemmsitz der Kontaktfahne 5 in dem Sockelstein 6 gewährleistet.

## Patentansprüche

1. Fahrzeugscheinwerferlampe mit einem Lampengefäß, einem darin angeordneten Leuchtmittel (2) und einem Lampensockel, wobei
- das Lampengefäß (1) ein abgedichtetes Ende (11) besitzt, das mindestens eine Molybdänfolienabdichtung aufweist, die mindestens eine Molybdänfolie (112) und einen mit dieser überlappenden und verbundenen Stromzuführungsdraht (24) umfasst, der aus dem abgedichteten Ende (11) des Lampengefäßes (1) herausragt,
- der Lampensockel eine metallische Sockelhülse (3) aufweist, in dem das abgedichtete Ende (11) des Lampengefäßes (1) fixiert ist,
- die metallische Sockelhülse (3) mindestens einen Durchbruch (30), der im Bereich des abgedichteten Endes (11) des Lampengefäßes (1) angeordnet ist, und mindestens eine angeformte Lasche (32) besitzt, die in den Durchbruch (30) hineinragt und im Überlappungsbereich der mindestens einen Molybdänfolie (112) mit dem Stromzuführungsdraht (24) an dem abgedichteten Ende (11) des Lampengefäßes (1) anliegt,
**dadurch gekennzeichnet, dass** die mindestens eine Lasche (32) als Kühlblech ausgebildet ist und ihr freies Ende näher an dem Leuchtmittel (2) angeordnet ist als ihr an die Sockelhülse (3) angeformtes Ende.

2. Fahrzeugscheinwerferlampe nach Anspruch 1, **dadurch gekennzeichnet, dass** die mindestens eine Molybdänfolie (112) und der damit überlappende Stromzuführungsdraht (24) durch eine Schweißung miteinander verbunden sind und die mindestens eine an die metallische Sockelhülse (3) angeformte Lasche (32) im Bereich der Schweißung an dem abgedichteten Ende (11) des Lampengefäßes (1) anliegt.

3. Fahrzeugscheinwerferlampe nach Anspruch 1, **dadurch gekennzeichnet, dass** die metallische Sockelhülse (3) aus Edelstahl oder Messing besteht.

## Claims

1. Vehicle headlamp having a lamp vessel, a luminous means (2) arranged therein and a lamp base,
- the lamp vessel (1) having a sealed end (11), which has at least one molybdenum foil seal, which comprises at least one molybdenum foil (112) and a power supply wire (24), which overlaps and is connected to said molybdenum foil and protrudes out of the sealed end (11) of the lamp vessel (1) ,
- the lamp base having a metallic base sleeve (3), in which the sealed end (11) of the lamp vessel (1) is fixed,
- the metallic base sleeve (3) having at least one aperture (30), which is arranged in the region of the sealed end (11) of the lamp vessel (1), and having at least one integrally formed tab (32), which protrudes into the aperture (30) and bears against the sealed end (11) of the lamp vessel (1) in the region of overlap between the at least one molybdenum foil (112) and the power supply wire (24), **characterized in that** the at least one tab (32) is in the form of a cooling plate and its free end is arranged closer to the luminous means (2) than its end which is integrally formed on the base sleeve (3).

2. Vehicle headlamp according to Claim 1, **characterized in that** the at least one molybdenum foil (112) and the power supply wire (24) which overlaps it are connected to one another by means of welding, and the at least one tab (32) which is integrally formed on the metallic base sleeve (3) bears against the sealed end (11) of the lamp vessel (1) in the region of the welding.

3. Vehicle headlamp according to Claim 1, **characterized in that** the metallic base sleeve (3) consists of stainless steel or brass.

## Revendications

1. Lampe de phare de véhicule comprenant une enceinte de lampe, un agent (2) lumineux qui y est disposé et un culot de lampe, dans laquelle
- l'enceinte (1) de la lampe a une extrémité (11) rendue étanche, qui comporte au moins une étanchéité par ruban de molybdène qui comprend au moins un ruban (112) de molybdène et un fil (24) d'entrée de courant le chevauchant et y étant relié, le fil faisant saillie de l'extrémité (11) rendue étanche de l'enceinte (1) de la lampe,
- le culot de la lampe comporte une douille (3) métallique de culot, dans laquelle l'extrémité (11) rendue étanche de l'enceinte (1) de la lampe est immobilisée,
- la douille (3) métallique de culot a au moins une traversée (30) qui est disposée dans la région de l'extrémité (11) rendue étanche de l'enceinte (1) de la lampe et au moins une patte (32) qui y est formée, qui pénètre dans la traversée (30) et qui s'applique dans la région de chevauchement du au moins un ruban (112) de molybdène avec le fil (24) d'entrée de courant à l'extrémité (11) rendue étanche de l'enceinte (1) de la lampe,
**caractérisée en ce que** la au moins une patte (32) est constituée sous la forme d'une tôle de refroidissement et son extrémité libre est disposée plus près de l'agent (2) d'éclairage que son extrémité formée sur la douille (3) de culot.

2. Lampe de phare de véhicule suivant la revendication 1, **caractérisée en ce qu'**au moins un ruban (112) de molybdène et le fil (24) d'entrée de courant le chevauchant sont reliés entre eux par une soudure et la au moins une patte (32) formée sur la douille (3) métallique de culot s'applique à l'extrémité (11) rendue étanche de l'enceinte (1) de la lampe dans la région de la soudure.

3. Lampe de phare de véhicule suivant la revendication 1, **caractérisée en ce que** la douille (3) métallique de culot est en acier fin ou en laiton.
